**Europäisches Patentamt**

**European Patent Office**

**Office européen des brevets**

(19)

(11) Veröffentlichungsnummer: **0 279 831**
**B1**

(12) **EUROPÄISCHE PATENTSCHRIFT**

(45) Veröffentlichungstag der Patentschrift: **10.10.90**

(51) Int. Cl.⁵: **G 06 F 11/16**

(21) Anmeldenummer: **87905605.9**

(22) Anmeldetag: **11.08.87**

(86) Internationale Anmeldenummer:
**PCT/EP87/00438**

(87) Internationale Veröffentlichungsnummer:
**WO 88/01410 25.02.88 Gazette 88/05**

(54) **ANORDNUNG ZUM SIGNALTECHNISCH SICHEREN ÜBERTRAGEN VON SERIELLEN DATEN ZWISCHEN VORZUGSWEISE ZWEIKANALIG ARBEITENDEN SICHEREN RECHNERN UNTER VERWENDUNG EINES DOPPELRING-BUSSYSTEMS.**

(30) Priorität: **21.08.86 DE 3628299**

(43) Veröffentlichungstag der Anmeldung:
**31.08.88 Patentblatt 88/35**

(45) Bekanntmachung des Hinweises auf die Patenterteilung:
**10.10.90 Patentblatt 90/41**

(84) Benannte Vertragsstaaten:
**AT CH DE FR IT LI NL**

(56) Entgegenhaltungen:

**Nachrichtentechnik, Elektronik, No.6, 1986, (Ost-Berlin,DD); B.Kaufhold et al.: "überblick zur Funktionssicherung in Ring- und Liniennetzen; Teil 2: Funktionssichere LAN", pages 216-219; see page 217, right-hand column; line 33-page 218, left-hand column, line 16**

(73) Patentinhaber: **Licentia Patent-Verwaltungs-GmbH**
**Theodor-Stern-Kai 1**
**D-6000 Frankfurt/Main 70 (DE)**

(72) Erfinder: **OPPER, Manfred**
**Manfred-von-Richthofen-Strasse 168**
**D-1000 Berlin 42 (DE)**

(74) Vertreter: **Lertes, Kurt, Dr. et al**
**Licentia Patent-Verwaltungs-GmbH Theodor-Stern-Kai 1**
**D-6000 Frankfurt/M 70 (DE)**

Courier Press, Leamington Spa, England.

# EP 0 279 831 B1

56 Entgegenhaltungen:

Proceedings of the Eights Triennial World Congress of the International Federation of Automatic Control, Kyoto, Japan, 24-28 August 1981; vol.3, Pergamon Press, (Oxford, GB); R.M. Konakovsky: "On safe information processing system", pages 1669-1674, see page 1669; right-hand column, line 7 - page 1670, left-hand column, line 11

Computer, 1984, IEEE Computer Society, (Long Beach, US), H. Ihara et al.: "Autonomous decentralized computer control systems", page 57-66; cited in the application

**Beschreibung**

Die Erfindung bezieht sich zunächst auf eine Anordnung zum Übertragen von seriellen Daten zwischen vorzugsweise zweikanalig arbeitenden sicheren Rechnern unter Verwendung eines Doppelring-Bussystems, wie sie im Oberbegriff des Anspruches 1 näher definiert ist.

Doppel-Bussysteme sind bisher bereits in verschiedenen Variationen ausgeführt worden. Die bekannten Lösungen haben jedoch verschiedene Nachteile.

So ist es u.a. bekannt, im Normalbetrieb die beiden Ringbusse des Doppelring-Bussystems parallel redundant zu betreiben, wobei sie im gegenläufigen Sinn unidirektional von den Daten durchflossen werden. Jeder Rechner ist dort mit dem einen Kanal mit dem einen Ringbus und mit dem anderen Kanal mit dem anderen Ringbus funktionsmäßig über aktive Buskoppler verbunden. Die Rechner der einzelnen Stationen sind autonom, das ganze System dezentralisiert. Bei einem erkannten Störfall erfolgt eine Umschaltung des Doppelring-Bussystems auf eine Betriebsart "TEST", wobei mit Querverbindungen zwischen den Ringbussen durch "Minor Loops" zwischen den Stationen eine Störstellenlokalisierung erfolgt. Danach erfolgt dann eine weitere Umschaltung auf eine Betriebsart "FEHLER", wobei die angrenzenden Abschnitte unter Abtrennung des störbehafteten Abschnittes dauernd in eine Einfach-Ringstruktur ohne Redundanz überführt werden. (COMPUTER August 1984, S. 57, 58, 60 bis 66).

Die aktiven Buskoppler des bekannten, völlig dezentralisierten Systems haben jeweils eigene Intelligenz durch Mikroprozessoren und bewirken jeweils eine eigene aktive begrenzte Datenverarbeitung. Diese vielen Datenverarbeitungen können jedoch jede für sich "falsch" arbeiten, ein Fehler mit seinen Auswirkungen ist oft nicht oder nur sehr schwer durch aufwendige Tests bestimmbar und ein Sicherheitsnachweis so kaum zu erfüllen. Das System ist nicht fail-safe.

Derartige Systeme sind aus diesen Gründen unzweckmäßig.

Aufgabe der Erfindung ist die Schaffung eines signaltechnisch sicheren Systems zur Übertragung von seriellen Daten zwischen vorzugsweise zweikanalig arbeitenden sicheren Rechnern unter Verwendung eines Doppelring-Bussystems mit hohem Betriebsausfallschutz, wobei auch der Sicherheitsnachweis relativ einfach zu führen ist.

Diese Aufgabe wird gemäß den kennzeichnenden Merkmalen des Anspruches 1 gelöst. Vorteilhafte Weiterbildungen der Erfindung sind den Unteransprüchen entnehmbar.

Anhand von schematischen Ausführungsbeispielen wird die Erfindung im nachfolgenden näher erläutert.

Es wird dazu auf die Figuren der Zeichnung verwiesen.

Es zeigen:

Fig. 1 ein Funktionsschema des Übertragungssystems

Fig. 2 den Aufbau einer Bussteuereinheit in Blockbilddarstellung

Fig. 3 das Prinzip für Betriebsart "NORM"

Fig. 4 das Prinzip für Betriebsart "TEST"

Fig. 5 das Prinzip für Betriebsart "FEHLER"

Fig. 6 ein Funktionsschema für die Betriebsart "TEST"

Fig. 7 ein Funktionsschema für die Betriebsart "FEHLER"

Fig. 8 Funktionsschaltung einer Betriebssteuereinrichtung in Betriebsart "NORM"

Fig. 9 Funktionsschaltung einer Betriebssteuereinrichtung in Betriebsschaltung "TEST"

Fig. 10 und 11 Funktionsschaltungen der Betriebssteuereinrichtung in der Betriebsart "FEHLER".

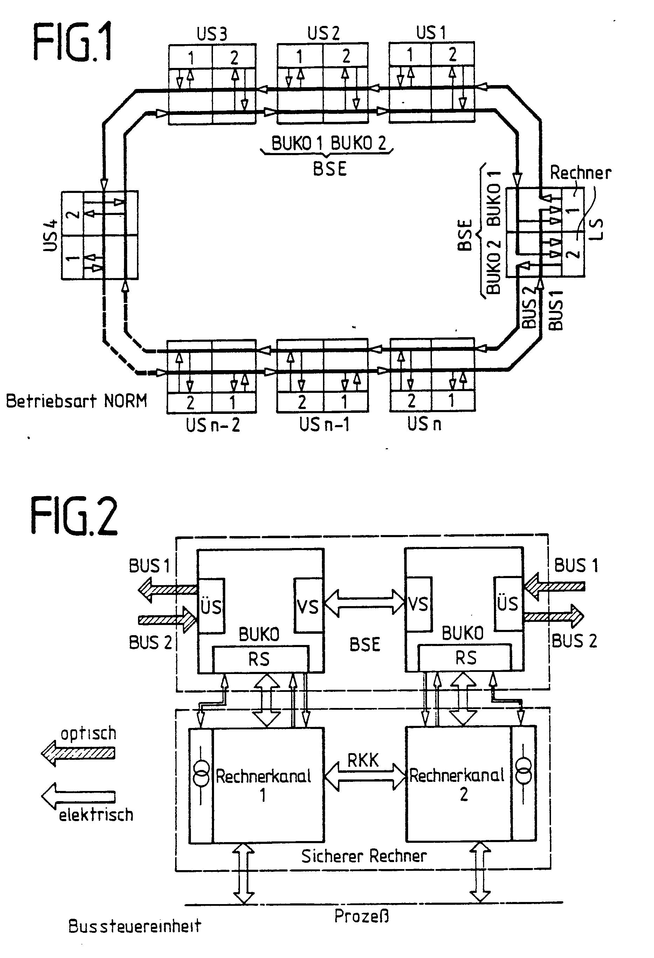

Die grundsätzliche Funktionsweise des vorzugsweise optischen Übertragungssystems wird in Fig. 1 dargestellt. Die angeschalteten Rechnerkanäle sind durch die Zahlen 1 und 2 für die Rechnerkanäle 1 und 2 angedeutet. Bei dieser Doppelringstruktur werden die beiden Ringe des Übertragungssystems im gegenläufigen Sinn jeweils unidirektional von den Informationen durchflossen. Das System enthält eine Leitstation LS und Unterstationen US 1 bis USn. Hauptaufgabe der Leitstation LS ist die Verwaltung und Kontrolle der Buszuleitungen. Die Unterstationen US müssen für einen Buszugriff von der Leitstation LS aufgerufen werden und können nicht eigenmächtig zugreifen. An den Stellen, an denen die Busteilnehmer angeschlossen sind, sind die beiden Ringbusse des Übertragungssystems BUS 1, BUS 2 für den Anschluß jeweils einer aktiven Bussteuereinheit BSE unterbrochen. Durch die redundante Leitungsführung mit zwei Übertragungsleitungen und die noch zu beschreibenden verschiedenen Betriebsarten der aktiven Buskoppler wird die Fehlertoleranz des Übertragungssystems erreicht. Der Teil- oder Gesamtausfall einer Einzelkomponente führt aber nie zu einem Gesamtausfall des Übertragungssystems, sondern beschränkt sich ausschließlich auf das vom Ausfall betroffene Element, weil beim Ausfall einer angeschlossenen Station oder dem Ausfall eines Buskopplers eine Rekonfiguration des Übertragungssystems durchgeführt wird.

Als Datentransportmedium können vorteilhaft Lichtwellenleiter oder/und Kupferkabel benutzt werden. Bei der Verwendung von Lichtwellenleiter als Übertragungsbusse werden zur Erzeugung und Umsetzung der optischen Signale des Lichtwellenleiters in elektrische Signale für die angeschaltete Rechnereinheit und die zeit- und amplitudenmäßige Regenerierung des optischen Signals aktive Buskoppler BUKO notwendig. Diese haben die Abschwächung und Verzerrung des optischen Signals durch den Lichtwellenleiter zu kompensieren. Jeweils zwei aktive Buskoppler BUKO 1 und BUKO 2 finden dabei als Koppelglieder zwischen dem Übertragungssystem und den jeweiligen zweikanaligen Rechnern Verwendung.

Beide Rechnerkanäle 1 und 2 können auf die beiden Busse BUS 1 und BUS 2 des parallelredundanten Übertragungssystems zugleich zugreifen, wenn sie als zugriffsberechtigte Stationen Daten auf den Bus absetzen wollen. Dazu werden die beiden Busringe an der Sendestelle für die Dauer des aktiven Buszugriffs so aufgetrennt, daß die Sendeeinrichtung ihre Daten einspeisen kann und es nicht zu Überlagerungen mit bereits gesendeten Signalen kommen kann, die bereits einen Ring durchlaufen haben. Die endlose Zirkulation von Signalen wird unterbunden. Die aktive Leitstation LS des Systems hat neben der Regelung des Buszugriffsrechts als Bussteuerstation weitere Funktionen: Bei jedem aktiven Buszugriff eines Rechnerkanals der Leitstation LS findet eine Kontrolle des gesamten Übertragungssystems statt, weil entsprechende Monitorfunktionen in der Leitstation LS die umgelaufenen Daten des anderen Ringbusses empfangen, die von dem parallelredundanten Rechnerkanal der Leitstation LS aufgeschaltet wurden. Durch Vergleich mit den eigenen Sendedaten wird der korrekte Durchlauf der Nachrichten ermittelt. Der Ausfall eines Busteilnehmers oder gestörte Nachrichtenzyklen werden bei jedem Nachrichtenzyklus der Leitstation LS von dem anderen Rechnerkanal der Leitstation LS erkannt. Ebenfalls werden die einzelnen Nachrichtenzyklen der zwei Rechnerkanäle der Leitstation LS zeitlich synchronisiert.

Durch das besondere Konstruktionsprinzip der Bussteuereinheiten BSE ist die Verwendung verschiedener Übertragungsmedien innerhalb eines Übertragungssystems problemlos möglich. Neben dem Einsatz von Glasfaser-Lichtwellenleitern sind auch Kunststoffaser-Lichtwellenleiter oder elektrische Übertragungsleitungen möglich, sofern ihr Einsatz sinnvoll ist. Das Übertragungssystem kann durch geeignete Wahl des physikalischen Übertragungsmediums allen Umgebungsbedingungen optimal gerecht werden.

Fig. 2 zeigt den Aufbau einer Bussteuereinheit BSE genauer. Es wird die prinzipelle Verbindung der Buskoppler BUKO 1 und BUKO 2 mit einem zweikanaligen sicheren Rechner aufgezeigt. Mit der Bussteuereinheit BSE kann durch Betrieb in verschiedenen Betriebsarten eine Störungsstelle im Übertragungssystem lokalisiert und durch eine Neukonfiguration des Übertragungssystems unschädlich gemacht werden. Dazu jedoch noch später weiteres. Eine vollständige Bussteuereinheit BSE besteht immer aus zwei—bis auf evtl. Unterschiede in den Übertragungsschnittstellen—identisch aufgebauten Buskopplern BUKO 1 und BUKO 2, die die Verbindung zwischen einem Rechnerkanal der zweikanaligen Busteilnehmer und dem parallelredundanten Übertragungssystem darstellen. Jeder Buskoppler besitzt drei verschiedene Schnittstellen: RS, VS, ÜS.

1. Mit der Rechnerschnittstelle RS wird der Buskoppler an einen Rechnerkanal des zweikanaligen sicheren Rechners angeschaltet. Die Rechnerschnittstelle enthält Leitungen für die Stromsversorgung, Funktionskontrolle und Funktionssteuerung des Buskopplers und die serielle Datenein- und ausgabe des Rechners.

2. Beide Buskoppler BUKO 1 und BUKO 2 einer Bussteuereinheit sind durch eine Verbindungsschnittstelle VS miteinander verbunden. Die Verbindungsschnittstelle besteht ausschließlich aus Datenleitungen.

3. Die Übertragungsschnittstelle ÜS stellt die Verbindung des Buskopplers zum Übertragungssystem dar. Die Übertragungsschnittstelle besitzt jeweils eine Eingangs- und eine Ausgangsbelegung zur Anschaltung der beiden entgegengesetzt gerichteten parallelredundanten Übertragungsleitungen.

Die Stromversorgung der Buskoppler erfolgt durch den angeschalteten Rechnerkanal über die Rechnerschnittstelle RS. Alle weiteren Signale der Rechnerschnittstelle sind rückwirkungsfrei mit dem angeschalteten Rechnerkanal verbunden. Die Datenleitungen der Verbindungsschnittstelle VS sind als symmetrische Übertragungsleitungen ausgeführt und voneinander entkoppelt.

Weil eine Bussteuereinheit BSE aus zwei gleichartigen Buskopplern besteht und weil ein Buskoppler eine vollständige Übertragungsschnittstelle zu einer Seite des Übertragungssystems enthält, ist der problemlose Übergang von dem einen Übertragungsmedium zu einem anderen Übertragungsmedium von einer Übertragungsschnittstelle zu der anderen Übertragungsschnittstelle einer BSE in einem Übertragungssystem möglich. Dazu ist es lediglich notwendig, daß die Übertragungsschnittstellen der Buskoppler entsprechend ausgeführt sind. Wenn ein Buskoppler der Bussteuereinheit eine optische Übertragungsschnittstelle und der andere Buskoppler dieser Bussteuereinrichtung eine elektrische Übertragungsschnittstelle hat, dann ist der problemlose Übergang von einem optischen auf ein elektrisches Übertragungsmedium und umgekehrt möglich.

Durch drei verschiedene Betriebsarten der Bussteuereinheit BSE wird der Betriebsausfallschutz gewährleistet.

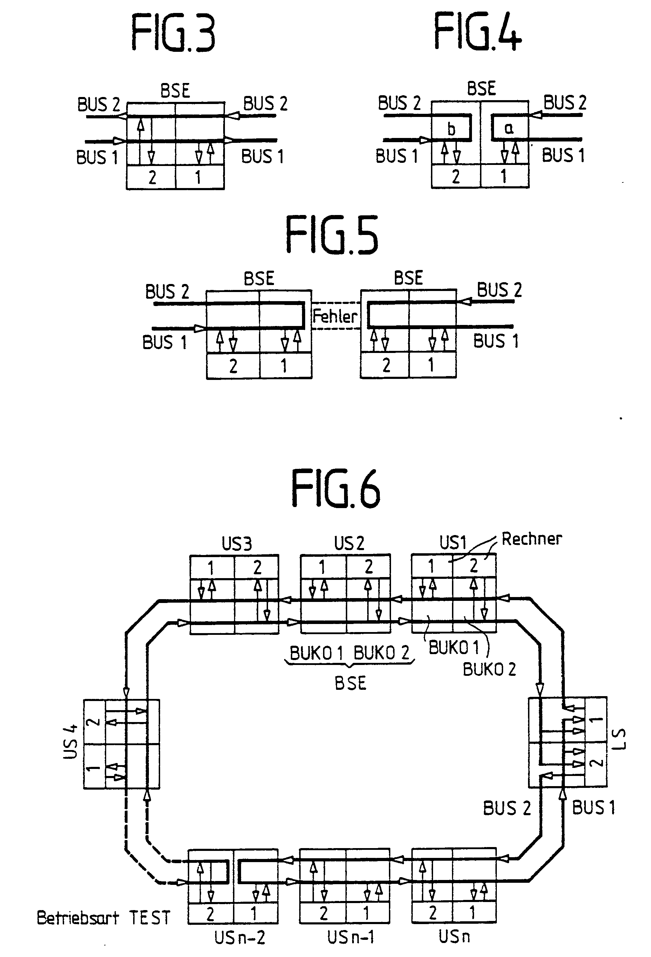

1. In der Betriebsart "NORM" (normal) ist der Rechnerkanal 1 des angeschalteten zweikanaligen Rechners mit dem Bus 1 und der Rechnerkanal 2 des angeschalteten zweikanaligen Rechners mit dem Bus 2 funktionsmäßig verbunden (hierzu wird auf Fig. 1 verwiesen). Die Datenübertragung erfolgt parallelredundant, weil beide Rechnerkanäle bei dem aktiven Buszugriff die Nachrichten in gleicher Reihenfolge und quasi synchron zueinander auf die Datenübertragungsstrecke geben. Wird ein irreversibler Fehler erkannt, wird auf die Betriebsart "TEST" umgeschaltet. Den Datenfluß in der Betriebsart "NORM" zeigt Fig. 3.

2. Die Betriebsart "TEST" dient dazu, im Störfall das Übertragungssystem zu testen, damit die Störungsstelle lokalisiert und durch eine Neukonfiguration des Übertragungssystems die Datenübertragung fortgesetzt werden kann. Dazu wird innerhalb der Übertragungsstrecke der Bussteuereinheit BSE der normale Übertragungsweg aufgetrennt und die Signale auf die parallelredundante Übertragungsleitung geführt. Z.B. von BUS 1 auf BUS 2 gleich Testweg 1/2 und umgekehrt als Testweg 2/1. Die Signale werden quasi gespiegelt und als Echo auf den parallelredundanten BUS an die Sendestation LS zurückgeworfen. In dieser Betriebsart kann die Funktionsfähigkeit jeder Bussteuereinrichtung BSE schrittweise festgestellt werden. Den zugehörigen Datenfluß zeigt Fig. 4.

3. Mit der Betriebsart "FEHLER" einer Bussteuereinheit BSE des Übertragungssystems wird im Störfall eine Neukonfiguration des Übertragungssystems durchgeführt. Der Abschnitt des Übertragungssystems, in dem sich die Störquelle befindet, wird dabei vom Übertragungssystem so abgetrennt, daß die parallelredundante Busstruktur aufgelöst und die Störungsquelle in den beiden angrenzenden Bussteuereinrichtungen vom Übertragungssystem abgekoppelt wird. In dieser Betriebsart unterbricht die Bussteuereinheit BSE den Datenfluß in einer Richtung des Datenübertragungssystems derart, daß der Übertragungsweg innerhalb der BSE von dem einen unidirektionalen Datenbus auf den parallelredundanten Datenbus geschaltet wird. Das Datenübertragungssystem besitzt in dieser Betriebsweise keine Redundanz mehr. Die Datenübertragung erfolgt hierbei nicht mehr in zeitlich gleicher Reihenfolge, sondern nacheinander. D. h. die einzelnen Kanäle des zweikanaligen sicheren Rechners werden zeitlich nacheinander auf dem BUS aktiv. Für das Einschalten der Betriebsart "FEHLER" wird der entsprechenden Station über den funktionsfähigen Übertragungsweg das Kommando "FEHLER" mit "Fehlerweg 1/2" oder "Fehlerweg 2/1" übermittelt. Daraufhin geben die beiden Rechnerkanäle der angesprochenen Station in der angeschalteten Bussteuereinrichtung Steuersignale aus, die eine Umschaltung der Datenwege in der angeschalteten Bussteuereinrichtung herbeiführen.

Die Einstellung der verschiedenen Betriebsarten der Bussteuereinrichtung erfolgt durch entsprechende Signale der angeschalteten zweikanäligen Rechner über die Rechnerschnittstelle des jeweils zugeordneten Buskopplers. Für die Dauerihrer Aktivierung wird die entsprechende Funktion der Bussteuereinrichtung bewirkt.

Wie bereits ausgeführt, wird bei einem Teil- oder Gesamtausfall von Einzelkomponenten des Übertragungssystems der Totalausfall des Übertragungssystems verhindert. Lediglich ein Busteilnehmer kann dann unter bestimmten Umständen nicht mehr angesprochen werden. Das Übertragungssystem toleriert dabei die folgenden Einzelfehler:

ein aktiver Buskoppler fällt vollständig oder teilweise aus

ein angeschlossener Rchner fällt vollständig oder teilweise aus

einer oder beide Übertragungsleitungen des Übertragungssystems werden zwischen zwei benachbarten Stationen an einer oder mehreren Stellen unterbrochen

eine Station wird aus dem System herausgenommen, d.h. die Übertragungsleitungen werden an den beiden Übertragungsschnittstellen der BSE abgekoppelt

die Stromversorgung eines oder beider Rechnerkanäle der angeschalteten Rechnereinheit ist unterbrochen oder fällt vollständig aus.

Zur Funktion wird auf Fig. 1 verwiesen.

Jedes Signal, das in Betriebsart "NORM" von der Leitstation LS auf eine der beiden jeweils unidirektional wirkenden Übertragungsbusse gelegt wird, muß letztlich nach einer festen Verzögerungszeit, die von der Leitungslänge und der Anzahl der zwischengeschalteten Buskoppler abhängt, am Leitungsende wieder am Eingang der Leitstation LS anstehen. Damit wird bei allen aktiven Buszyklen der Leitstation die Funktionsfähigkeit des Übertragungssystems getestet.

Ein Störfall des Übertragungssystems wird von der Leitstation deshalb erkannt, weil die Endpunkte der beiden Ringbusse BUS 1 und BUS 2 mit den Empfangseinrichtungen der Leitstation verbunden sind. Alle Sendedaten der Leitstation LS müssen somit von ihr wieder als Echo empfangen werden, sofern das Übertragungssystem nicht gestört ist.

Ist das Echo auf einem der Ringbusse nicht vorhanden oder stimmen die empfangenen Daten des Echos nicht mit den ausgesandten Daten überein, dann liegt ein Störflal auf der Datenübertragungsstecke vor. Damit die Störungsstelle lokalisiert und dadurch unwirksam gemacht werden kann und damit die der Störungsstelle benachbarten Buskoppler der Bussteuereinrichtung BSE die entsprechenden Ausfallfunktionen wahrnehmen, muß auf Betriebsart "TEST" umgeschaltet werden. Den Test führt die Leitstation LS durch. Sie legt dazu eine Testnachricht auf den einen unidirektionalen Bus z.B. BUS 1 und beauftragt in bestimmter Reihenfolge die einzelnen Unterstationen US 1 bis USn auf Betriebsart "TEST" umzuschalten. Die Testnachricht wird in der jeweilig gerade umgeschalteten Unterstation auf den anderen entgegengesetzt gerichteten parallelredundanten BUS, z.B. BUS 2 geführt und als "Echo" an die Leitstation LS zurückgeschleift. Durch Vergleich der beiden Nachrichten (Testnachricht mit Echo) kann der Zustand des Datenübertragungssystems für den aktuellen Testweg festgestellt werden. Durch fortschreitende Testläufe wird die Störungsstelle lokalisiert. Fig. 6 ziegt das System mit n Teilnehmern, indem die Unterstation USn−2 auf die Betriebsart "TEST" geschaltet wurde. Wurde festgestellt, daß sich der Fehler in einem Bereich zwischen USn−2 und USn befindet, wird dieser Bereich beidseitig herausgenommen und die BSE der Unterstation USn−2 auf Verbindung von BUS 1 nach BUS 2 und die BSE der Station USn auf interne Verbindung von BUS 2 nach BUS 1 von der Leitstation LS beauftragt.

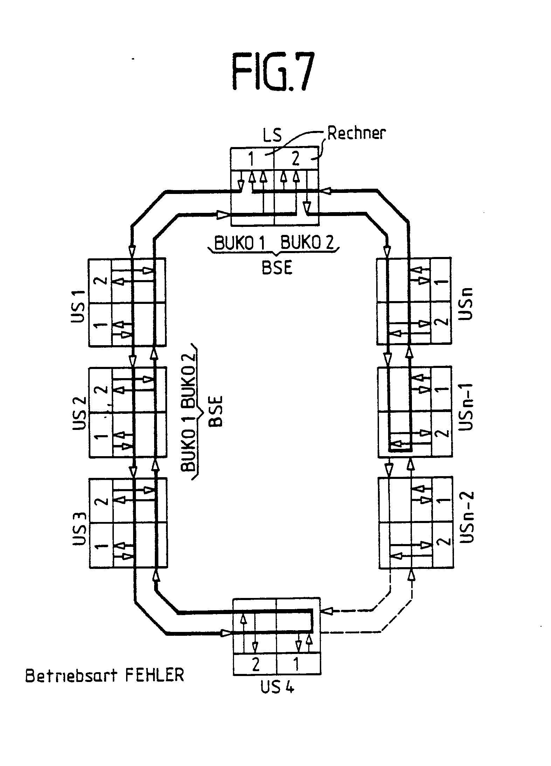

Damit ist die Redundanz des Übertragungssystems aufgebraucht, d.h. die Doppelringstruktur des Übertragungssystems wird durch eine neue Konfiguration in einer Einfachringstruktur ohne Redundanz aufgelöst. Die Nachrichten der parallelredundanten Rechnerkanäle können dann nicht mehr zugleich auf das Bussystem gegeben werden, sondern müssen nacheinander aufgeschaltet werden. Fig. 7 zeigt das System in diesem Zustand mit ausgeschaltetem Fehler zwischen den Unterstationen USn−2 und USn. Die Unterstation USn−1 wurde herausgenommen.

Die Umschaltung in die Betriebsarten "TEST" und "FEHLER" hat in beiden Buskopplerkanälen eines Busteilnehmers zu erfolgen, auch wenn nur ein Kanal des sicheren Rechners ein entsprechendes Kommando erhalten hat. Der andere parallel redundante Übertragungsweg könnte gestört sein, so daß in der Betriebsart "NORM" dann nur ein ungestörter Übertragungsweg zur Verfügung steht, mit dem nur einer der beiden Rechnerkanäle erreicht werden kann.

Das grundsätzliche Funktionsprinzip der aktiven Buskoppler BUKO bei der Verwendung optischer Übertragungsleitungen ist folgendes:

Auskopplung der optischen Signale aus dem Lichtwellenleiter.

optische/elektrische Umsetzung der eingekoppelten Signale.

zeit- und amplitudenmäßige Regenerierung der elektrischen Signale.

Übertragung der regenerierten Signale in den anderen Buskoppler der gleichen Bussteuereinheit über die Versorgungsschnittstelle VS.

Weiterleitung des regenerierten elektrischen Signals zu den Empfangseinrichtungen des zugeordneten Rechnerkanals oder zu den elektrisch/optischen Umsetzern des Buskopplers.

elektrisch/optische Umsetzung der elektrischen Signale.

Wiedereinkopplung der optischen Signale in den Lichtwellenleiter.

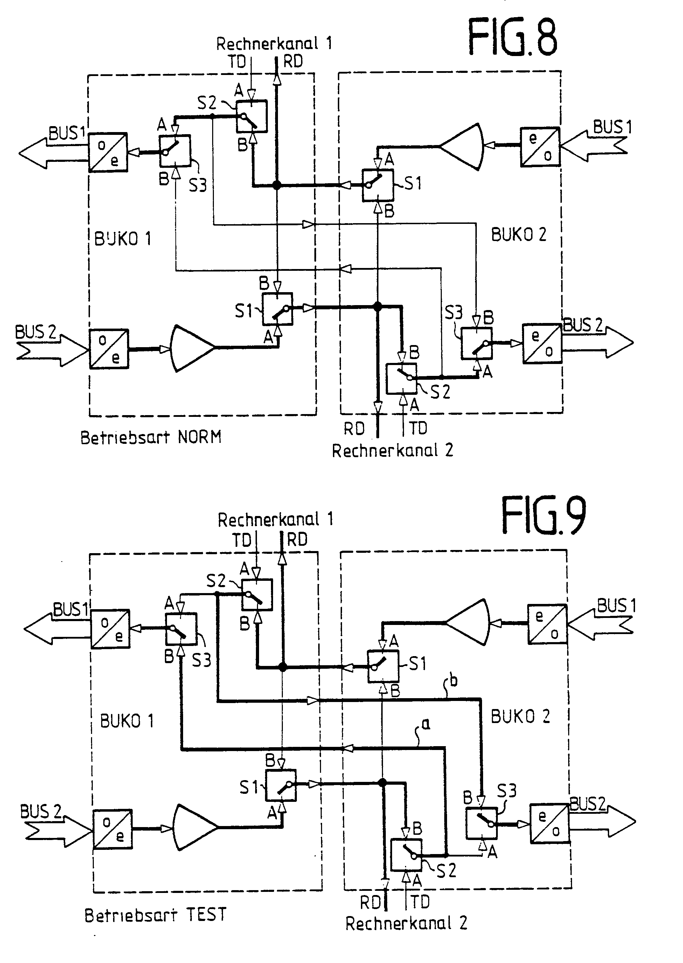

In den Fig 8, 9, 10, 11 ist eine Bussteuereinrichtung BSE in detaillierter Blockbilddarstellung für die verschiedenen Betriebsarten dargestellt. Der jeweils aktuelle Signalfluß ist für die eingestellte Betriebsart dick eingezeichnet.

Die Umschaltung einer Bussteuereinrichtung in die verschiedenen Betriebsarten erfolgt durch die zwei zugehörigen Buskoppler mit jeweils drei elektronischen Schaltern S1, S2, S3.

In Fig. 8 für die Betriebsart "NORM" befindet sich der erste Schalter S1 jedes Buskopplers in Schaltstellung A für eine Weiterleitung des Signalflusses. Dieser geht dann weitere über den zweiten Schalter und den dritten Schalter des anderen Buskopplers. Durch den zweiten Schalter S2 kann der Signalfluß innerhalb der Bussteuereinheit BSE aufgetrennt werden, damit die angeschaltete Rechnereinheit über Sendedaten in das Übertragungssystem einspeisen kann und eine Zirkulation der im Übertragungsring (BUS 1 oder BUS 2) vorhandenen Daten unterbunden wird. Der zweite Schalter S2 wird durch die Datenleitungen TD gesteuert. Der zweite Schalter S2 befindet sich hierbei in der Schaltstellung B und der dritte Schalter S3 in der Schaltstellung A. In der Betriebsart "NORM" wird somit für jeden BUS (BUS 1 und BUS 2) der Datenfluß durch die BSE geleitet. Gleichzeitig erhalten die Rechner über die Datenleitung RD Informationen.

Aus Fig. 9 ist die Betriebsart "TEST" ersichtlich. Hierbei sind die durchgehenden Datenflüsse beider Ringbusse BUS 1, BUS 2 unterbrochen und der eingehende Ringbus, z.B. BUS 1, ist auf den abgehenden Ringbus, z.B. BUS 2, des gemeinsamen Buskopplers, z.B. BUKO 2, geschaltet. Die Datenflüsse verlaufen dabei jeweils vom eingehenden Ringbus, z.B. BUS 1, über den Schalter S1/Schaltstellung A des einen Buskopplers, z.B. BUKO 2, und über den zweiten Schalter S2/ Schaltstellung B des anderen Buskopplers, z.B. BUKO 1 sowie zurück über eine Querverbindung, z.B. b und den dritten Schalter S3/Schaltstellung B des einen Buskopplers, z.B. BUKO 2 zum abgehenden Ringbus, z.B. BUS 2 Die zugeordneten Kanäle 1, 2 des Rechners sind über Leitungen RD innerhalb der verschiedenen Buskoppler BUKO 1, BUKO 2 direkt angeschlossen. Somit ist jeweils der dritte Schalter S3 jedes Buskopplers in Stellung B vom angeschalteten Rechnerkanal geschaltet. Der Schalter S2 verbleibt wie in der Betriebsart "NORM" in Schaltstellung B. Der Datenfluß von z.B. BUS 1 wird dabei über BUS 2 zurückgeleitet. Der Datenfluß von BUS 2 läuft darüberhinaus über BUS 1 zurück.

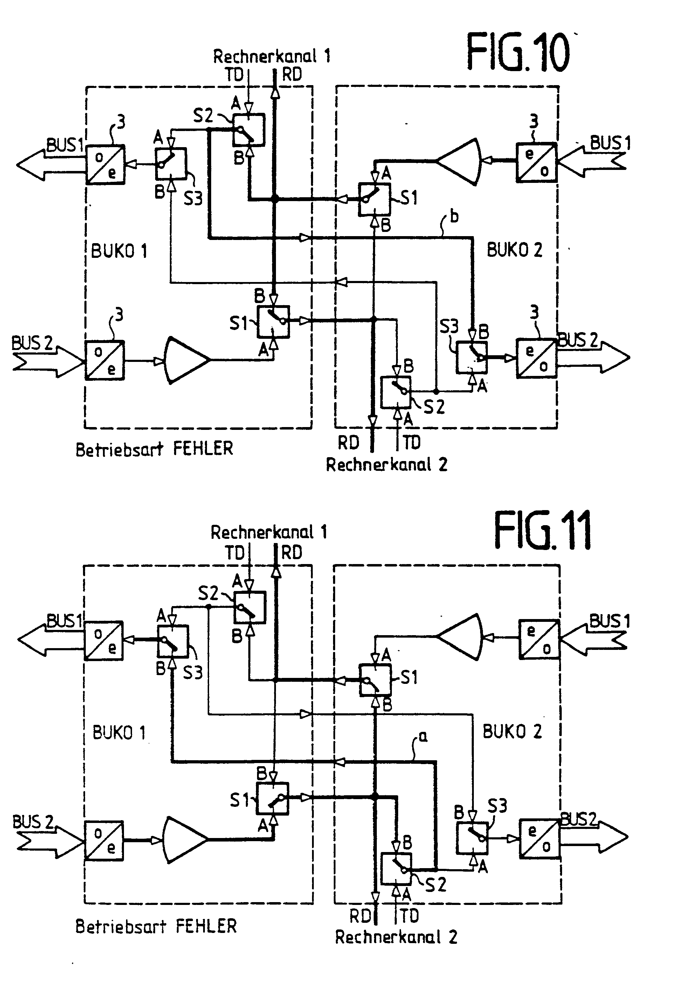

In Fig. 10 ist die Betriebsart "FEHLER" dargestellt und zwar für den Fehlerweg 1/2, d.h. von BUS 1 zu BUS 2. Beide Rechnerkanäle 1 und 2 erhalten dabei über RD Datenflußinformation über einen Schalter S1 in Stellung B. Das gleiche jedoch für den Fehlerweg 2/1 ist quasi spiegelbildlich der Fig. 11 entnehmbar.

In der Betriebsart "FEHLER" werden die durchgehenden Datenflüsse beider Ringbusse BUS 1, BUS 2 unterbrochen und abwechselnd der eingehende Ringbus BUS 1 auf den abgehenden Ringbus BUS 2 des gemeinsamen Buskopplers BUKO 2 und umgekehrt der eingehende Ringbus BUS 2 auf den abgehenden Ringbus BUS 1 des anderen gemeinsamen Buskopplers BUKO 1 geschaltet. Dabei verlaufen die Datenflüsse jeweils über den ersten Schalter S1/Schaltstellung A des einen Buskopplers BUKO 2 oder BUKO 1 und über den zweiten Schalter S2/Schaltstellung B des anderen Buskopplers BUKO 1 oder BUKO 2 sowie über die Querverbindung b oder a und den dritten Schalter S3/Schaltstellung B des einen Buskopplers BUKO 2 oder BUKO 1. Beide Rechnerkanäle 1, 2 erhalten abwechselnd Zugriff zu beiden Ringbussen.

Abwechselnd sind jeweils der eine Rechnerkanal, z.B. 1 oder 2 direkt und der andere Rechnerkanal, z.B 2 oder 1, über den z. Zt. freien ersten Schalter S1/Schaltstellung B innerhalb eines der Buskoppler BUKO 1 oder BUKO 2 an die durchlaufenden Datenflüsse angeschlossen.

Durch die Erfindung ist ein äußerst fehlerteolerantes Bus- und Übertragungssystem geschaffen worden, das den gestellten Aufgaben voll gerecht wird. Durch Bildung eines hierarchisch aufgebauten Systems mit einer definierten zentralen Leitstation und Unterstationen ist die Störbehandlung wesentlich besser determinierbar.

**Patentansprüche**

1. Anordnung zum signaltechnisch sicheren Übertragen von seriellen Daten zwischen vorzugsweise zweikanalig arbeitenden sicheren Rechnern (LS; US1 bis USn) unter Verwendung eines Doppelring-Bussystems (BUS 1, BUS 2),

bei dem im Normalbetrieb (Betriebsart "NORM") die beiden Ringbusse des Doppelring-Bussystems parallel redundant im gegenläufigen Sinn unidirektional von den Daten durchflossen werden, wobei jeder Rechner mit einem Kanal (z.B. 1) mit dem einen Ringbus (z.B. BUS 1) und mit dem anderen Kanal (z.B. 2) mit dem anderen Ringbus (z.B. BUS 2) funktionsmäßig über aktive Buskoppler verbunden ist,

bei dem bei einem erkannten Störfall durch eine Umschaltung des Doppelring-Bussystems auf Testbetrieb (Betriebsart "TEST") mit Querverbindungen (a, b; Figur 4) zwischen den Ringbussen eine Störstellen-Lokalisierung erfolgt,

bei dem danach eine weitere Umschaltung auf Reservebetrieb (Betriebsart "FEHLER") erfolgt, indem die angrenzenden Abschnitte unter Abtrennung des störbehafteten Abschnittes dauernd in einer Einfach-Ringstruktur ohne Redundanz überführt werden,

dadurch gekennzeichnet, daß für die Steuerung der beiden Ringbusse (BUS 1, BUS 2) eine aktive Leitstation (LS) mit einem zweikanaligen Leitrechner vorgesehen ist, der die Buszugriffsrechte für andere Busteilnehmer (Unterstationen US1 bis USn), die mit eigenen Rechnern versehen sind, hierarchisch verwaltet und über entsprechende Monitorfunktionen die umgelaufenen Daten des einen Ringbusses (z.B. BUS 1) jeweils mit den Sendedaten des anderen Ringbusses (z.B. BUS 2) und umgekehrt über Kreuz vergleicht, wobei Nichtgleichheit eine Störung markiert, die eine Umschaltung von der Betriebsart "NORM" für Normalbetrieb auf die Betriebsart "TEST" veranlaßt, bei der die Unterstationen (US1 bis USn) von der Leitstation (LS) zyklisch aufgerufen werden, wobei jeweils paarweise in Bussteuereinheiten (BSE) zusammengefaßte aktive Buskoppler (BUKO 1, BUKO 2) solange fortschreitend Unterbrechungen und Querverbindungen (a, b) schaffen, bis eine Nichtgleichheit der Sende- und Empfangsdaten innerhalb der Leitstation (LS) die Störstelle signalisiert, was eine Umschaltung auf die Betriebsart "FEHLER" veranlaßt.

2. Anordnung nach Anspruch 1, dadurch gekennzeichnet, daß die Ankopplung der Rechner (US1 bis USn) an die Ringbusse (BUS 1, BUS 2) über die aktiven Buskoppler (BUKO 1, BUKO 2) erfolgt, die von der Leitstation (LS) ansteuerbar sind, wobei jeweils eine Rechnerschnittstelle (RS) für die Verbindung mit dem zugeordneten Rechnerkanal (1 oder 2) und eine Übertragungsschnittstelle (ÜS) für den Anschluß der beiden Ringbusse (BUS 1, BUS 2) vorgesehen ist.

3. Anordnung nach Anspruch 2, dadurch gekennzeichnet, daß jeweils zwei Buskoppler (BUKO 1, BUKO 2), die die beiden Kanäle jedes sicheren Rechners beidienen, über eine interne Verbindungsschnittstelle (VS) entkoppelt miteinander verbunden und zu einer Bussteuereinheit (BSE) zusammengefaßt sind, und daß über die Bussteuereinheit (BSE) der Durchlauf des Datenflusses über die Ringbusse (BUS 1, BUS 2) oder das Ab- bzw. Umschalten des Datenflusses steuerbar ist.

4. Anordnung nach Anspruch 3, dadurch gekennzeichnet, daß der Datenfluß innerhalb der Buskoppler (BUKO 1, BUKO 2) der Bussteuereinheiten (BSE) elektrisch erfolgt, wobei bei einem anderen äußeren Übertragungsmedium, z.B. Licht, die Übertragungsschnittstellen mit zusätzlichen opto/elektronischen Umsetzern (3, Figur 10) ausgerüstet sind.

5. Anordnung nach den Ansprüchen 3 und 4, dadurch gekennzeichnet, daß für das Umschalten der Bussteuereinheiten (BSE) in die verschiedenen Betriebsarten ("NORM", "TEST", "FEHLER") jedem Buskoppler (BUKO 1, BUKO 2) je drei elektronische Schalter (S1, S2, S3) zugeordnet sind, die durch entsprechende Signale (Leitung TD) der angeschalteten Rechnerkanäle (1, 2) über Rechnerschnittstellen (RS) ansteuerbar sind.

6. Anordnung nach einem der vorhergehenden Ansprüche, dadurch gekennzeichnet, daß in der Betriebsart "NORM" die verschieden gerichteten Datenflüsse beider Ringbusse (BUS 1, BUS 2) jeweils über einen ersten Schalter (S1/Schaltstellung A) des einen Buskopplers (BUKO 2 bzw. BUKO 1) über einen zweiten Schalter (S2/Schaltstellung B) des anderen Buskopplers (BUKO 1 bzw. BUKO 2) sowie über einen dritten Schalter (S3/Schaltstellung A) des anderen Buskopplers (BUKO 1 bzw. BUKO 2) verlaufen, wobei die zugeordneten Kanäle (1, 2) des Rechners über Leitungen (RD) innerhalb der beiden Buskoppler direkt angeschlossen sind (Figur 8).

7. Anordnung nach einem der vorhergehenden Ansprüche, dadurch gekennzeichnet, daß in der Betriebsart "TEST" die durchgehenden Datenflüsse beider Ringbusse (BUS 1, BUS 2) unterbrochen werden und der eingehende Ringbus (z.B. BUS 1 bzw. BUS 2) auf den abgehenden Ringbus (z.B. BUS 2 bzw. BUS 1) des gemeinsamen Buskopplers (z.B. BUKO 2 bzw. BUKO 1) geschaltet wird, wobei die Datenflüsse jeweils von den eingehenden Ringbussen (BUS 1 bzw. BUS 2) über einen Schalter (S1/Schaltstellung A) des einen Buskopplers (z.B. BUKO 2 bzw. BUKO 1), über einen zweiten Schalter (S2/Schaltstellung B) des anderen Buskopplers (z.B. BUKO 1 bzw. BUKO 2) sowie zurück über eine Querverbindung (b bzw. a) und einen dritten Schlater (S3/Schaltstellung B) des einen Buskopplers (z.B. BUKO 2 bzw. BUKO 1) zum abgehenden Ringbus (BUS 2 bzw. BUS 1) verlaufen, wobei die zugeordneten Kanäle (1, 2) des Rechners über Leitungen (RD) innerhalb der beiden Buskoppler (BUKO 1, BUKO 2) direkt angeschlossen sind (Fig. 9).

8. Anordnung nach einem der vorhergehenden Ansprüche, dadurch gekennzeichnet, daß in der Betriebsart "FEHLER" die durchgehenden Datenflüsse beider Ringbusse (BUS 1, BUS 2) unterbrochen und abwechselnd der eingehende Ringbus (BUS 1) auf den abgehenden Ringbus (BUS 2) des gemeinsamen Buskopplers (BUKO 2) und umgekehrt der eingehende Ringbus (BUS 2) auf den abgehenden Ringbus (BUS 1) des anderen gemeinsamen Buskopplers (BUKO 1) geschaltet wird, wobei die Datenflüsse jeweils über einen ersten Schalter (S1/Schaltstellung A) des einen Buskopplers (BUKO 2 oder BUKO 1), über einen zweiten Schalter (S2/Schaltstellung B) des anderen Buskopplers (BUKO 1 oder BUKO 2) sowie über die Querverbindung (b oder a) und einen dritten Schalter (S3/Schaltstellung B) des einen Buskopplers (BUKO 2 oder BUKO 1) verlaufen und beide Rechnerkanäle (1, 2) abwechselnd Zugriff zu beiden Ringbussen erhalten.

9. Anordnung nach Anspruch 8, dadurch gekennzeichnet, daß dabei jeweils abwechselnd der eine Rechnerkanal (z.B. 1 oder 2) direkt und der andere Rechnerkanal (z.B. 2 oder 1) über den z. Zt. freien ersten Schalter (S1/Schaltstellung B) innerhalb eines der Buskoppler (BUKO 1 oder BUKO 2) an die durchlaufenden Datenflüsse angeschlossen sind.

**Revendications**

1. Dispositif pour transmettre, de manière fiable sur le plan de la technique de signalisation, des données sérielles entre des ordinateurs fiables (LS; US1 à USn) travaillant de préférence sur deux canaux, en utilisant un système de bus en double boucle (BUS 1, BUS 2),

dans lequel, en fonctionnement normal (mode de fonctionnement "NORM"), les deux bus-boucles du système de bus en double boucle sont parcourus dans des sens inverses, de manière parallèle et redondante, unidirectionnellement par les données, chaque ordinateur étant relié fonctionnellement, via des coupleurs de bus actifs, avec un canal (par exemple 1) au premier bus-boucle (par exemple BUS 1) et, avec l'autre canal (par exemple 2) à l'autre bus-boucle (par exemple BUS 2),

dans lequel, lors d'un cas de défaillance reconnu, une localisation de l'emplacement du dérangement s'effectue par une commutation du système de bus en double boucle sur le fonctionnement de test (mode de fonctionnement "TEST"), avec des liaisons transversales (a, b, figure 4) entre les bus-boucles,

dans lequel, il se produit ensuite une autre commutation sur un fonctionnement en réserve (mode de fonctionnement "DEFAUT") dans lequel les portions voisines sont durablement transformées en une structure de boucle simple, sans redondance, la portion affectée par le dérangement étant séparée,

caractérisé par le fait que, pour la commande des deux bus-boucles (BUS 1, BUS 2), il est prévu une station directrice (LS) avec un ordinateur directeur à deux canaux, lequel gère hiérarchiquement les droits d'accès aux bus pour d'atures participants (sous-station US 1 à USn) qui sont munis de leurs propres ordinateurs, et, par des fonctions de surveillance correspondantes, compare les données ayant circulé dans le premier bus-boucle (par exemple BUS 1) aux données émises pour l'autre bus-boucle (par exemple BUS 2) et inversement en croisant, la non-identité indiquant un dérangement qui provoque une commutation du mode de fonctionnement "NORM" pour marche normale au mode de fonctionnement "TEST" dans lequel les sous-stations (US 1 à USn) sont appelées cycliquement par la station directrice (LS), les coupleurs de bus actifs (BUKO 1, BUKO 2) groupés à chaque fois par paire dans l'unité de commande de bus (BSE) créant de manière suivie des interruptions et des liaisons transversales (a, b) jusqu'à ce qu'une dissemblance des données émises et recues à l'intérieur de la station directrice (LS) signale l'emplacement du dérangement, ce qui provoque une commutation sur le mode de fonctionnement "DEFAUT".

2. Dispositif selon revendication 1, caractérisé par le fait que le couplage des ordinateurs (US 1 à USn) aux bus-boucles (BUS 1, BUS 2) s'effectue via les coupleurs de bus actifs (BUKO 1, BUKO 2) qui peuvent être commandés par la station directrice (LS), une interface d'ordinateur (RS) étant prévue à chaque fois pour la liaison au canal d'ordinateur conjugué (1 ou 2) et une interface de transmission (ÜS) étand prévue à chaque fois pour le raccordement des deux bus-boucles (BUS 1, BUS 2).

3. Dispositif selon revendication 2, caractérisé par le fait qu'à chaque fois deux coupleurs de bus (BUKO 1, BUKO 2) qui desservent les deux canaux de chaque ordinateur fiable sont reliés par une interface de liaison interne (VS), cel avec découplage, et sont groupés en une unité de commande de bus (BSE), et par le fait que l'unité de commande de bus (BSE) permet de commander le passage du flux de données par les bus-boucles (BUS 1, BUS 2) ou la coupure ou la commutation du flux de données.

4. Dispositif selon revendication 3, caractérisé par le fait que le flux de données à l'intérieur des coupleurs de bus (BUKO 1, BUKO 2) des unités de commande de bus (BSE) s'effectue électriquement, les interfaces de transmission étant équipées de convertisseurs supplémentaires opto/électroniques (3, figure 10), cela dans le cas d'un autre milieu de transmission, par exemple lumière.

5. Dispositif selon les revendications 3 et 4, caractérisé par le fait que, pour commuter les unités de commande des bus (BSE) sur les differents modes de fonctionnement ("NORM", "TEST", "DEFAUT"), trois commutateurs électroniques (S1, S2, S3) sont affectés à chaque fois à chaque coupleur de bus (BUKO 1, BUKO 2), ces commutateurs pouvant être commandés par l'intermédiaire d'interfaces (RS), par des signaux correspondants (ligne TD) des canaux d'ordinateur raccordés (1, 2).

6. Dispositif selon l'une des revendications précédentes, caractérisé par le fait que, dans le mode de fonctionnement "NORM" les flux de données de directions diverses des deux bus-boucles (BUS 1, BUS 2) passent à chaque fois par un premier commutateur (S1/position A) de premier coupleur de bus BUKO 2 ou BUKO 1 selon le cas) et par un deuxième commutateur (S2/position B) de l'autre coupleur de bus (BUKO 1 ou BUKO 2 selon le cas), ainsi que par un troisième commutateur (S3/position A) de l'autre coupleur de bus (BUKO 1 ou BUKO 2 selon le cas), les canaux y afférents (1, 2) de l'ordinateur étant raccordés directement par des lignes (RD) à l'intérieur des deux coupleurs de bus (figure 8).

7. Dispositif selon l'une des revendications précédentes, caractérisé par le fait que, dans le mode de fonctionnement "TEST", les flux de données passantes des deux bus-boucles (BUS 1, BUS 2) sont interrompus et le bus entrant (par exemple BUS 1 ou BUS 2 selon le cas) est branché sur le bus-boucle sortant (par exemple BUS 2 ou BUS 1 selon le cas) du coupleur de bus commun (par exemple BUKO 2 ou BUKO 1 selon le cas), les flux de données passant à chaque fois des bus entrants (BUS 1 ou BUS 2 selon le cas) via un commutateur (S1/position A) du premier coupleur de bus (par exemple BUKO 2 ou BUKO 1 selon le cas) via un deuxième commutateur (S2/position B) de l'autre coupleur de bus (par exemple BUKO 1 ou BUKO 2 selon le cas) et revenant via une liaison transversale (b ou a selon le cas) et un troisième commutateur (S3 en position B) du premier coupleur de bus (par exemple BUKO 2 ou BUKO 3 selon le cas) au bus sortant (BUS 2 ou BUS 1 selon le cas), les canaux y relatifs (1, 2) de l'ordinateur étant raccordés directement par des lignes à l'intérieur des deux coupleurs de bus (BUKO 1, BUKO 2) (figure 9).

8. Dispositif selon l'une des revendications précédentes, caractérisé par le fait que, dans le mode de fonctionnement "DEFAUT", les flux de données passantes des deux bus-boucles (BUS 1, BUS 2) sont interrompus, et tour à tour le bus entrant (BUS 1) est commuté sur le bus sortant (BUS 2) du coupleur de bus commun (BUKO 2), et, inversement, le bus entrant (BUS 2) est commuté sur le bus sortant (BUS 1) de l'autre coupleur de bus commun (BUKO 1), les flux de données passant à chaque fois par un premier commutateur (S1 position A) du premier coupleur de bus (BUKO 2 ou BUKO 1), et par un deuxième commutateur (S2 position B) de l'autre coupleur de bus (BUKO 1 ou BUKO 2) ainsi que via liaison transversale (b ou a) et par un troisième commutateur (S3 position B) du premier coupleur de bus (BUKO 2 ou BUKO 1), et les deux canaux d'ordinateur (1, 2) recevant tour a tour un accès aux deux bus en boucle.

9. Dispositif selon revendication 8, caractérisé par le fait que, tour à tour, le premier canal d'ordinateur (par exemple 1 ou 2) est relié directement et l'autre canal d'ordinateur (par exemple 2 ou 1), via le premier commutateur alors libre (S1 position B) à l'intérieur de l'un des coupleurs de bus (BUKO 1 ou BUKO 2), aux flux de données s'écoulant.

**Claims**

1. Arrangement for the transmission, secure in terms of signalling technique, of serial data between secure computers (LS; US1 to USn), which preferably operate in two channels, with the use of a double-ring bus system (BUS 1, BUS 2),

in which, in normal operation (operational mode "NORMAL"), both the ring buses of the double-ring bus system in parallel redundancy are flowed through by the data unidirectionally in opposite sense, wherein each computer is functionally connected by one channel (for example, 1) with the one ring bus (for example, BUS 1) and by the other channel (for example, 2) with the other ring bus (for example, BUS 2) each time by way of active bus couplers,

in which, in a recognised fault case, a fault place localisation takes place through a switching-over of the double-ring bus system to test operation (operational mode "TEST") with cross-connections (a, b; figure 4) between the ring buses and

in which a further switching-over to reserve operation (operational mode "FAULT") takes place thereafter, in that the adjoining portions are converted permanently into a single-ring structure without redundancy, while the faulty portion is isolated,

characterised thereby, that for the control of both the ring buses (BUS 1, BUS 2), an active master station (LS) with a two-channel master computer is provided, which hierarchically administers the bus access rights for other bus subscribers (substations US1 to USn), which are provided with their own computers, and by way of appropriate monitoring functions and in crosswise manner compares the circulated data of the one ring bus (for example, BUS 1) each time with the transmitted data of the other ring bus (for example, BUS 2) and conversely, wherein inequality marks a fault which causes a switching-over from the operational mode "NORMAL" for normal operation to the operational mode "TEST", in which the substations (US1 to USn) are called up cyclically by the master station (LS), while active bus couplers (BUKO 1, BUKO 2), which are combined in respective pairs into bus control units (BSE), progressively create interruptions and cross-connections (a, b) until an inequality between the transmitted data and the received data within the master station (LS) signals the fault place, which causes a switching-over to the operational mode "FAULT".

2. Arrangement according to claim 1, characterised thereby, that the coupling of the computers (US1 to USn) to the ring buses (BUS 1, BUS 2) takes place by way of the active bus couplers (BUKO 1, BUKO 2), which are drivable from the master station (LS), wherein a respective computer interface (RS) is provided for the connection with the associated computer channel (1 or 2) and a respective transmission interface (ÜS) is provided for the connection of both the ring buses (BUS 1, BUS 2).

3. Arrangement according to claim 2, characterised thereby, that two bus couplers (BUKO 1, BUKO 2), which serve both the channels of each secure computer, are each time connected one with the other decoupled by an internal connecting interface (VS) and combined into one bus control unit (BSE) and that the passage of the data flow by way of the ring buses (BUS 1, BUS 2) or either the switching-off or the switching-over of the data flow is controllable by way of the bus control unit (BSE).

4. Arrangement according to claim 3, characterised thereby, that the data flow within the bus couplers (BUKO 1, BUKO 2) of the bus control units (BSE) takes place electrically, while the transmission interfaces are equipped with additional opti-electronic converters (3, figure 10) for a different external transmission medium, for example light.

5. Arrangement according to the claims 3 and 4, characterised thereby, that for the switching-over of the bus control units (BSE) into the different operational modes ("NORM", "TEST", "FAULT"), each bus coupler (BUKO 1, BUKO 2) is associated with three respective electronic switches (S1, S2, S3), which are drivable by way of computer interfaces (RS) by appropriate signals (line TD) of the computer channels (1, 2) that are switched on.

6. Arrangements according to one of the preceding claims, characterised thereby, that in the operational mode "NORMAL", the differently directed data flows of both the ring buses (BUS 1, BUS 2) each entered respectively by way of a first switch (S1/switch setting A) of the one bus coupler (BUKO 2 or BUKO 1) and by way of a second switch (S2/switch setting B) of the other bus coupler (BUKO 1 or BUKO 2) as well as by way of a third switch (S3/switch setting A) of the other bus coupler (BUKO 1 or BUKO 2), wherein the associated channels (1, 2) of the computer are connected directly by way of lines (RD) within both the bus couplers (figure 8).

7. Arrangements according to one of the preceding claims, characterised thereby, that in the operational mode "TEST", the continuous data flows of both the ring buses (BUS 1, BUS 2) are interrupted and the incoming ring bus (for example, BUS 1 or BUS 2) is switched to the outgoing ring bus (for example, BUS 2 or BUS 1) of the common bus coupler (for example, BUKO 2 or BUKO 1), wherein the data flows from each of the incoming ring buses (BUS 1 or BUS 2) respectively extend by way of a switch (S1/switch setting A) of the one bus coupler (for example, BUKO 2 or BUKO 1) and by way of a second switch (S2/switch setting B) of the other bus coupler (for example, BUKO 1 or BUKO 2) as well as back by way of a cross-connection (b or a) and a third switch (S3/switch setting B) of the one bus coupler (for example BUKO 2 or BUKO 1) to the outgoing ring bus (BUS 2 or BUS 1), wherein the associated channels (1, 2) of the computer are connected directly by way of lines (RD) within both the bus couplers (BUKO 1, BUKO 2) (figure 9).

8. Arrangement according to one of the preceding claims, characterised thereby, that in the operational mode "FAULT", the continuous data flows of both the ring buses (BUS 1, BUS 2) are interrupted and alternately the incoming ring bus (BUS 1) is switched to the outgoing ring bus (BUS 2) of the common bus coupler (BUKO 2) and conversely the incoming ring bus (BUS 2) is switched to the outgoing ring bus (BUS 1) of the other common bus coupler (BUKO 1), wherein the data flows each extend respectively by way of a first switch (S1/switch setting A) of the one bus coupler (BUKO 2 or BUKO 1) and by way of a second switch (S2/switch setting B) of the other bus coupler (BUKO 1 or BUKO 2) as well as by way of the cross-connection (b or a) and a third switch (S3/switch setting B) of the one bus coupler (BUKO 2 or BUKO 1) and both computer channels (1, 2) have access alternatively to both ring buses.

9. Arrangement according to claim 8, characterised thereby, that the one computer channel (for example, 1 or 2) is then connected directly and, in alternation, the other computer channel (for example, 2 or 1) by way of the first switch (S1/switch setting B), which is free at that time, within one of the bus couplers (BUKO 1 or BUKO 2) to the data flows passing through.

EP  0 279 831  B1

FIG.1

FIG.2

EP 0 279 831 B1

# FIG.3

BUS 2 — BSE — BUS 2
BUS 1 — — BUS 1
| 2 | 1 |

# FIG.4

BUS 2 — BSE — BUS 2
BUS 1 — b | a — BUS 1
| 2 | 1 |

# FIG.5

BUS 2 — BSE — BSE — BUS 2
BUS 1 — Fehler — BUS 1
| 2 | 1 | | 2 | 1 |

# FIG.6

US3 | US2 | US1 — Rechner
| 1 | 2 | | 1 | 2 | | 1 | 2 |

BUKO 1 BUKO 2 , BUKO 1
BUKO 2
BSE

US 4
LS

BUS 2 | BUS 1

Betriebsart TEST
| 2 | 1 | | 2 | 1 | | 2 | 1 |
USn-2 | USn-1 | USn

·2

# FIG.7

Betriebsart FEHLER

## FIG.8

Rechnerkanal 1
TD    RD

BUS1

BUKO 1

BUS 2

Betriebsart NORM

BUS1

BUKO 2

BUS 2

RD    TD
Rechnerkanal 2

## FIG.9

Rechnerkanal 1
TD    RD

BUS1

BUKO 1

BUS 2

Betriebsart TEST

BUS1

b

a

BUKO 2

BUS2

RD    TD
Rechnerkanal 2

# FIG.10

Rechnerkanal 1

Betriebsart FEHLER

# FIG.11

Rechnerkanal 1

Betriebsart FEHLER